# EUROPÄISCHE PATENTSCHRIFT

(11) **EP 1 727 871 B1**
(45) Veröffentlichungstag und Bekanntmachung des Hinweises auf die Patenterteilung: **05.09.2007**
(21) Anmeldenummer: 05715449.4
(22) Anmeldetag: 22.02.2005
(51) Int. Cl.: C09D 183/16, C08K 5/00, C08K 3/00, C04B 41/49

(54) **BESCHICHTUNG FÜR METALLOBERFLÄCHEN, VERFAHREN ZU DEREN HERSTELLUNG SOWIE DEREN VERWENDUNG ALS SELBSTREINIGENDE SCHUTZSCHICHT, INSBESONDERE FÜR AUTOFELGEN**
COATING FOR METAL SURFACES, METHOD FOR THE PRODUCTION THEREOF AND USE THEREOF AS A SELF-CLEANING PROTECTIVE LAYER, PARTICULARLY FOR THE RIMS OF AUTOMOBILES
REVETEMENT POUR SURFACES METALLIQUES, SON PROCEDE DE PRODUCTION, ET SON UTILISATION EN TANT QUE COUCHE DE PROTECTION AUTONETTOYANTE, EN PARTICULIER POUR DES JANTES DE VEHICULE AUTOMOBILE

(30) Priorität: 04.03.2004 DE 102004011213
(43) Veröffentlichungstag der Anmeldung: 06.12.2006
(73) Patentinhaber: Clariant Finance (BVI) Limited, Road Town, Tortola (VG)
(72) Erfinder: BRAND, Stefan, 69493 Hirschberg-Leutershausen (DE); DIERDORF, Andreas, 65179 Hofheim/Ts. (DE); LIEBE, Hubert, 65207 Wiesbaden (DE); WACKER, Andreas, 68165 Mannheim (DE)
(74) Vertreter: Mikulecky, Klaus
(86) Internationale Anmeldenummer: PCT/EP2005/001828
(87) Internationale Veröffentlichungsnummer: WO 2005/085375

(56) Entgegenhaltungen:
- EP-A- 0 899 091
- US-A1- 2003 164 113
- PATENT ABSTRACTS OF JAPAN Bd. 2000, Nr. 05, 14. September 2000 (2000-09-14) & JP 2000 053920 A (ABC TRADING CO LTD; ABC KENZAI KENKYUSHO:KK), 22. Februar 2000 (2000-02-22)
- PATENT ABSTRACTS OF JAPAN Bd. 2003, Nr. 02, 5. Februar 2003 (2003-02-05) & JP 2002 301429 A (ABC TRADING CO LTD; ABC KENZAI KENKYUSHO:KK), 15. Oktober 2002 (2002-10-15)
- PATENT ABSTRACTS OF JAPAN Bd. 1999, Nr. 05, 31. Mai 1999 (1999-05-31) & JP 11 035887 A (N E CHEMCAT CORP), 9. Februar 1999 (1999-02-09)

## Beschreibung

Die vorliegende Erfindung betrifft eine superhydrophile, transparente, photokatalytisch aktive Beschichtung für Autofelgen. Die Beschichtung basiert auf Polysilazanen, die mit photokatalytisch aktiven Metalloxiden kombiniert werden.

Der Einsatz von Aluminiumfelgen im Automobilbau hat in den vergangenen Jahren stark zugenommen. Zum einen bieten die leichteren Aluminiumfelgen gegenüber Stahlfelgen Gewichtsvorteile und ermöglichen damit Kraftstoffeinsparungen, der wesentliche Aspekt ist aber, dass Aluminiumfelgen vor allem aus optischen Gründen eingesetzt werden, da diese dem Fahrzeug ein hochwertiges und edles Aussehen verleihen.

Ein Nachteil der Aluminiumfelgen ist vor allem deren Anfälligkeit gegenüber Korrosion und ihre Neigung zur Verschmutzung. Außerdem fallen Kratzer auf der glänzenden Oberfläche einer Aluminiumfelge deutlich stärker auf als auf einer Stahlfelge. Aluminiumfelgen werden daher am Ende des Fertigungsprozesses mit einer Beschichtung versehen, die in der Regel aus einer Vorbehandlung des Aluminiums (Chromatierung oder chromatfrei), einer Grundierung, aus einem pigmentierten Basislack und zuletzt einer Klarlackschicht besteht. Diese aufwendige Beschichtung ist notwendig, um einen ausreichenden Korrosionsschutz zu gewährleisten. Trotz der Lackierung bereitet die Korrosion Probleme, z.B. durch die Verwendung von Streusalz im Winter. Schließlich frisst sich Bremsstaub, der sich auf der Aluminiumfelge niederschlägt mit der Zeit ebenfalls in die Lackierung hinein und lässt sich nicht mehr entfernen. Darüber hinaus kommt es bei der Benutzung von Schneeketten leicht zum Verkratzen der Aluminiumfelgen. Eine weitere Ursache für Kratzer ist die Reinigung der Aluminiumfelgen mit abrasiven Mitteln, wie Bürsten oder Spülschwämmen. Zunehmend größere Verbreitung finden auch sogenannte polierte oder glanzgedrehte Aluminiumfelgen, deren Oberfläche aus einer optisch ansprechenden, glänzenden Oberfläche aus reinem Aluminium besteht, die lediglich von einer dünnen Klarlackschicht geschützt ist, um den Glanz der Felge zu erhalten. Bei dieser Art von Felgen ist der Korrosionsschutz durch die dünne Lackschicht, die zusätzlich für das menschliche Auge nicht erkennbar sein soll, nur sehr schwer zu bewerkstelligen.

Ein weiteres Problem bei Autofelgen ist die leichte Verschmutzung und die je nach Geometrie der Felge schwierige Reinigung. Verschiedene Autofelgentypen sind selbst nach Besuch einer Waschstraße nicht vollständig sauber. Die z.T. komplexe Geometrie der Felgen macht selbst eine Reinigung von Hand schwierig. Da aber die Mehrzahl der Autofahrer großen Wert auf permanent saubere Felgen legt und den dafür notwendigen Aufwand so gering wie möglich halten will, stellt sich hier ein noch zu lösendes Problem dar.

WO 02/088269A1 beschreibt die Verwendung einer Perhydropolysilazan-Lösung zur Herstellung hydrophiler, schmutzabweisender Oberflächen. Dort ist unter anderem auch die Verwendung im Automobilbereich (auf der Karosserie und den Felgen) beschrieben, wobei Perhydropolysilazanlösungen mit einem Gewichtsanteil von 0,3 bis 2 % empfohlen werden. In Beispiel 1 wird dabei eine stark verdünnte Lösung mit einem Gewichtsanteil von lediglich 0,5 % Perhydropolysilazan verwendet, mit der eine sehr dünne Beschichtung von ca. 0,2 Mikrometer Schichtdicke auf Stahl erhalten wird.

Eine solch dünne Beschichtung ist zum einen nicht geeignet, das Verkratzen der Lackoberfläche zu verhindern und außerdem nicht in der Lage, einen ausreichenden Korrosionsschutz zu gewährleisten, sowie das Einfressen von Bremsstaub zu unterbinden. Darüber hinaus reicht die dünne Schicht nicht aus, um die durch relativ inhomogene Klarlackschicht zu nivellieren und eine wirklich glatte, glasartige Oberfläche zu erhalten, die sich leicht reinigen lässt.

Die mit der oben beschriebenen hydrophilen Beschichtung erreichbaren Kontaktwinkel gegenüber Wasser liegen bei etwa 30°, was bedeutet, dass es bei Regen oder beim Reinigen der Felgen mit Wasser noch zur Bildung von flachen Tröpfchen kommt. Die Felgen sind durch die relativ hydrophile, glasartige Oberfläche leichter zu reinigen, allerdings hat die Beschichtung keinen selbstreinigenden Effekt.

Der vorliegenden Erfindung lag die Aufgabe zugrunde, eine Beschichtung zu entwickeln, die eine selbstreinigende Wirkung zeigt, hart und kratzfest ist und die Aluminiumfelge vor Korrosion und vor dem Einbrennen von Bremsstaub schützt.

Selbstreinigende Oberflächen kann man durch Beschichten mit einem photokatalytisch aktiven Metalloxid, vor allem Titandioxid in der Anatas Modifikation, erhalten.

Der selbstreinigende Effekt basiert im wesentlichen auf folgendem Mechanismus: bei der Photokatalyse werden Elektronen aus dem Valenzband des Titandioxids durch Licht angeregt und gehen in das Leitungsband über. Die Lebensdauer dieser angeregten Spezies ist groß genug, dass ein Teil der Elektronenlöcher als auch die Elektronen an die Oberfläche diffundieren können. Dort abstrahieren die Elektronenlöcher Elektronen von an der Oberfläche haftenden Wassermolekülen bzw. die freien Elektronen im Leitungsband werden auf Sauerstoffmoleküle übertragen. Daraus resultieren OH-Radikale, die über ein sehr großes Oxidationspotential (annähernd dem von elementarem Fluor) verfügen, sowie Superoxid-Anionen (O₂⁻), die ebenfalls stark oxidativ wirken.

Die hochreaktiven Spezies OH und O₂⁻ reagieren mit organischen Verbindungen (z.B. in Form von Schmutzpartikeln) unter Bildung von Wasser und Kohlendioxid, es kommt somit zu einem kompletten Abbau des organischen Schmutzes.

Neben dem photokatalytischen Effekt, durch den die Oxidation organischer Verunreinigungen an der Oberfläche der TiO₂-Partikel erfolgt, existiert noch ein weiterer Effekt, der für die Erzeugung selbstreinigender Oberflächen wichtig ist: die Superhydrophilie, wodurch es zur spontanen Benetzung der Oberfläche durch Wasser kommt. Dieser Effekt kann durch die Messung des Kontaktwinkels quantifiziert werden, wobei man ab einem Winkel < 5° von Superhydrophilie spricht.

Durch die Kombination der zwei beschriebenen Phänomene weisen photokatalytisch aktive Oberflächen einen Selbstreinigungseffekt auf: zum einen werden Schmutzpartikel auf der Oberfläche zerstört (sofern es sich um organisches Material handelt), außerdem führt die gute Benetzung mit Wasser dazu, dass Schmutzpartikel sowie der Oxidationsprodukte leichter von der Oberfläche abgewaschen werden. Darüber hinaus sorgt die superhydrophile Oberfläche für einen Antibeschlag-Effekt.

Das photokatalytisch wirksame Titandioxid hat vor allem in Japan als Beschichtungsmaterial für selbstreinigende Oberfläche Einzug gehalten. Es existieren zahlreiche Patentanmeldungen und Patente auf diesem Gebiet.

Allerdings beschränkt sich aufgrund der stark oxidativen Wirkung der gebildeten Radikale die Anwendung häufig auf Beschichtungen von anorganischen Substraten wie Glas, Keramik, Stein etc.

Zur Verwendung als Beschichtung auf organischen Substraten wie Kunststoffen, Lacken und Farben etc. benötigt man eine Schutzschicht zwischen dem Substrat und der Titandioxidschicht, die folgende Kriterien erfüllen sollte: sie sollte anorganischer Natur sein, damit sie unter Einwirkung von Sonnenlicht durch den photokatalytischen Effekt des Titandioxids nicht selbst zerstört wird, sie sollte sowohl zu dem Substrat, als auch zu der Titandioxidschicht eine ausreichende Haftung haben, sie sollte transparent sein, um das Erscheinungsbild des Substrats nicht zu beeinträchtigen.

Im Falle der Alufelgen sollte sie außerdem einen ausreichenden Kratzschutz und Korrosionsschutz liefern, und sie sollte sich mit den herkömmlichen Beschichtungstechniken kostengünstig aufbringen lassen. Um diese Bedingungen zu erfüllen, muss diese anorganische Schutzschicht über einen möglichst hohen Vernetzungsgrad verfügen, um eine Barriere für Ionen und Gase darzustellen.

Schutzschichten, die über die oben genannten Eigenschaften verfügen, lassen sich z.B. aus Perhydropolysilazan (PHPS) herstellen. PHPS bildet auf verschiedenen Substraten sehr dünne SiOₓ-Schichten aus, die je nach Wahl der Reaktionsparameter sehr vernetzt sein können.

Die Verwendung einer aus PHPS gewonnenen SiOₓ-Schutzschicht zwischen Substrat und einer Schicht aus photokatalytischem Titandioxid ist in einigen Patenten beschrieben.

So wird in JP 2000 025 156 eine selbstreinigende Schutzschicht bestehend aus einer Silicaschicht, die aus einem Polysilazan hergestellt wurde, und einer weiteren Schicht, die Titandioxid als Photokatalysator in einer Sol-Gel-Matrix enthält, beschrieben.

In JP 2000 017 620 wird das gleiche System zur Anwendung als Antibeschlag-Beschichtung auf Verkehrsspiegeln beansprucht. Wie oben beschrieben, zeigen superhydrophile Oberflächen Antibeschlag-Eigenschaften, da sich keine Tröpfchen, sondern ein Wasserfilm bildet.

In der JP 2000 017 619 wird ein System aus PHPS als Schutzschicht und aufgedampftem photokatalytischem Titandioxid bzw. Titandioxid in einer Siloxan-Matrix für selbstreinigende Lärmschutzwände aus Polycarbonat und Polymethylmethacrylat beschrieben.

Die in den oben zitierten Patenten beschriebenen Systeme werden ausschließlich auf Polycarbonat, Polymethylmethacrylat und Glas eingesetzt. Außerdem ist die Härte dieser Schichten mit 2 - 3 H Bleistifthärte nicht für den Einsatz auf einer Alufelge geeignet. Das Titandioxid wird in allen Fällen entweder aufgedampft oder als Sol-Gel-Matrix aufgetragen. Es werden keine Angaben über die Effektivität der photokatalytischen bzw. selbstreinigenden Wirkung gemacht.

In JP 11 035 887 wird eine Mischung aus PHPS und photokatalytischem Titandioxid auf Glas als Substrat aufgetragen. Dieses System ist nicht geeignet für organische Substrate, da hier keine anorganische Schutzschicht zum Einsatz kommt.

Auch in JP 11 227 091 wird keine anorganische Schutzschicht aus PH PS verwendet, so dass organische Substrate nicht verwendet werden können, ohne nach einiger Zeit zerstört zu werden.

JP 2000 053 920 und JP 2002 301 429 beschreiben Formulierungen, die PHPS und photokatalytisches Titandioxid enthalten, wobei der Feststoffgehalt an PHPS in der Formulierung zwischen 0,1 und 5 % beträgt. Die Verwendung beschränkt sich hier auf die Beschichtung von Außenfassaden.

In der JP 2003 170 060 wird ein System bestehend aus einer Primärschicht aus PHPS und einer Schicht aus photokatalytischem Titandioxid beschrieben, dessen gesamte Schichtdicke zwischen 0,01 und 0,5 µm liegt. Solche Schichtdicken sind für kratzfeste Aluminiumfelgen zu klein.

In JP 2000 189 795 und JP 2000 191 960 werden ebenfalls Systeme beschrieben, in denen PHPS als Primärschicht eingesetzt wird. Auf diese Primärschicht wird eine Titandioxidschicht, die in eine Sol-Gel Matrix eingebettet ist, gegeben.

Alle oben angegebenen photokatalytischen Systeme eignen sich nicht als selbstreinigende Beschichtung für Aluminiumfelgen, weil sie nicht alle Anforderungen für diese Anwendung erfüllen. Entweder sind die Schichten zu dünn und somit nicht kratzfest und auch nicht korrosionshemmend, oder es wird gar keine Primärschicht verwendet, so dass der Felgenlack nach längerer Sonneneinstrahlung durch die photokatalytische Wirkung des Titandioxids zerstört werden würde, oder die Aktivität des Titandioxids ist zu gering, da sich nicht genügend Titandioxid an der Oberfläche befindet und es somit seine photokatalytische Wirkung nicht entfalten kann.

Der vorliegenden Erfindung lag die Aufgabe zugrunde, eine Beschichtung zu entwickeln, die eine selbstreinigende Wirkung zeigt, hart und kratzfest ist und die Aluminiumfelge vor Korrosion und vor dem Einbrennen von Bremsstaub schützt.

Überraschenderweise wurde nun gefunden, dass man mit einer Perhydropolysilazanlösung zunächst eine ausreichend dicke Schutz- und Barriereschicht erzeugen kann, die kratzfest ist, die Korrosion der Aluminiumfelge und den chemischen Abbau der Klarlackschicht durch die photokatalytische Wirkung des Titandioxids sowie das Einbrennen des Bremsstaubs verhindert. Die darauf aufgebrachte Formulierung aus Titandioxid (Anatas) und Perhydropolysilazan liefert einen selbstreinigenden Effekt und haftet auf der PHPS-Schicht aufgrund der gleichen chemischen Natur ausgezeichnet.

Gegenstand der Erfindung ist daher eine Beschichtung für Metalloberflächen bestehend aus
a.) optional einer kratzfesten Perhydropolysilazanbasisschicht enthaltend ein Perhydropolysilazan der Formel (1) und
b.) einer oberen Schutzschicht, enthaltend mindestens ein Perhydropolysilazan der Formel (1) und photokatalytisches Titandioxid.

Das Perhydropolysilazan (PHPS) sowohl in der Basis-, als auch der Schutzschicht hat folgende Formel (1) 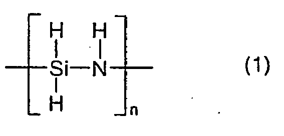 worin es sich bei n um eine ganze Zahl handelt und n so bemessen ist, dass das Polysilazan ein zahlenmittleres Molekulargewicht von 150 bis 150.000 g/mol aufweist.
Die Schutzschicht (b) weist eine Dicke von mindestens 1 Mikrometer, bevorzugt von 2 bis 20 Mikrometer, besonders bevorzugt 3 bis 10 Mikrometer auf und gewährleistet einen ausreichenden Schutz vor Korrosion und Verkratzung.

Die erfindungsgemäße Beschichtung eignet sich insbesondere als Schutzschicht für Autofelgen, wo sie das Einbrennen von Bremsstaub auf der Felge verhindert und gleichzeitig die Zerstörung des organischen Klarlacks durch die zusätzlich aufgebrachte, photokatalytisches Titandioxid enthaltende zweite Schicht.

Diese zweite Schicht enthält eine Mischung von PHPS der Formel (1) und nanoskaligem, photokatalytischem Titandioxid,

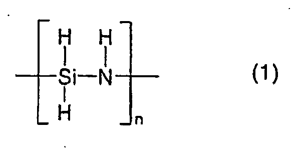

Das nanoskalige Titandioxid ist vorzugsweise vom Anatas-Typ und besitzt eine Partikelgröße von 0,001- 0,5 µm besitzt. Das Verhältnis von Perhydropolysilazan (bezogen auf den Feststoffgehalt von PHPS) zu Titandioxid in der photokatalytischen Schicht beträgt 1:0,01 bis 1:100, bevorzugt 1:0,1 - 1:50, besonders bevorzugt 1: 1 - 1: 5 beträgt.

Perhydropolysilazan zeigt eine sehr gute Haftung auf den verschiedensten Untergründen, z.B. Metallen, keramischen Oberflächen, aber auch auf polymeren Materialien wie beispielsweise Kunststoffen oder Lacken.

Weiterhin betrifft die Erfindung ein Verfahren zur Herstellung einer selbstreinigenden Beschichtung für Metalloberflächen, wobei zunächst in einem ersten optionalen Schritt
a.) eine Perhydropolysilazanlösung, enthaltend einen Katalysator und gegebenenfalls ein oder mehrere Co-Bindemittel in einem Lösungsmittel auf die Metalloberfläche als Basisschicht aufgebracht wird und anschließend
b.) auf diese Basisschicht oder die Metalloberfläche direkt eine weitere Schutzschicht, enthaltend mindestens ein Perhydropolysilazan der Formel (1) und photokatalytisches Titandioxid 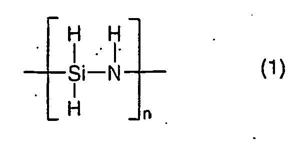 wobei es sich bei n um eine ganze Zahl handelt und n so bemessen ist, dass das Perhydropolysilazan ein zahlenmittleres Molekulargewicht von 150 bis 150.000 g/mol aufweist, aufgebracht wird.
   Die Perhydropolysilazanlösung kann daher beispielsweise auf einer lackierten Metalloberfläche, z.B. auf einer lackierten Aluminiumfelge, d.h. auf den Klarlack direkt, aufgebracht werden, um die Felge zusätzlich vor Verkratzen, Korrosion oder dem Einbrennen von Bremsstaub zu schützen. Zusätzlich erhöht sich nach Aufbringen der Beschichtung der Glanzgrad gegenüber dem Klarlack.
   Alternativ ist es möglich, auf die Klarlackschicht zu verzichten und die Perhydropolysilazanlösung bereits auf den pigmentierten Basislack aufzubringen, was die Einsparung eines Lackierschrittes ermöglicht..
   Im Falle von polierten oder sogenannten glanzgedrehten Aluminiumfelgen kann die Perhydropolysilzanlösung auch als einzige Schutzschicht verwendet werden, die den üblicherweise eingesetzten Klarlack ersetzt.

Somit ist es möglich eine Schutzschicht zu erzeugen, die eine deutlich geringere Dicke als herkömmliche Lackschichten aufweist, verbunden mit einem geringeren Verbrauch an Material und weniger Emission an Lösemitteln, die zusätzlich überlegene Eigenschaften als die herkömmlichen Lacke aufweist.

Die Aufbringung der ersten, wie auch der zweiten Schutzschicht erfolgt in Lösung. Hierzu wird das Perhydropolysilazan in einem Lösemittel gegebenenfalls unter Zusatz eines Katalysators gelöst oder dispergiert. Als Lösungsmittel für die Perhydropolysilazanformulierung eignen sich besonders organische Lösemittel, die kein Wasser und keine protischen Stoffe (wie z.B. Alkohole, Amine) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.
Die Konzentration an Perhydropolysilazan in dem Lösemittel für die Basisschicht und die Schutzschicht liegt im Bereich von 0,01 bis 40 Gew.-%, bevorzugt im Bereich von 1 bis 25 Gew.-%.

Weiterer Bestandteil der Perhydropolysilazanformulierung können Katalysatoren, wie organische Amine, feine Metallpartikel oder Metallsalze, oder organische Säuren, die die Bildung eines Silicafilms beschleunigen oder Additive, die z.B. Viskosität der Formulierung, Untergrundbenetzung, Filmbildung oder das Ablüftverhalten beeinflussen oder organische sowie anorganische UV-Absorber oder Photoinitiatoren sein.

Geeignete Katalysatoren sind N-heterozyklische Verbindungen, wie 1-Methylpiperazin, 1-Methylpiperidin, 4,4'-Trimethylendipiperidin, 4,4'-Trimethylen-(1-methylpiperidin), Diazobicyclo-(2,2,2)oktan, cis-2,6-Dimethylpiperazin.

Weitere geeignete Katalysatoren sind Mono-, Di- und Trialkylamine wie Methylamin, Dimethylamin, Trimethylamin, Phenylamin, Diphenylamin und Triphenylamin, DBU (1,8-Diazabicyclo(5,4,0)-7-undecen), DBN (1,5-Diazabicyclo(4,5,0)-5-nonen), 1,5,9-Triazacyclododekan und 1,4,7-Triazacyclononan.

Weitere geeignete Katalysatoren sind organische und anorganische Säuren wie Essigsäure, Propionsäure, Buttersäure, Valeriansäure, Maleinsäure, Stearinsäure, Salzsäure, Salpetersäure, Schwefelsäure, Phosphorsäure, Chlorsäure und hypochlorige Säure.

Weitere geeignete Katalysatoren sind Metallcarboxylate der allgemeinen Formel (RCOO)nM von gesättigten und ungesättigten, aliphatischen oder alizyklischen C₁-C₂₂ Carbonsäuren und Metallionen wie Ni, Ti, Pt, Rh, Co, Fe, Ru, Os, Pd, Ir, und Al; n ist die Ladung des Metallions. Weitere geeignete Katalysatoren sind Acetylacetonat-Komplexe von Metallionen wie Ni, Pt, Pd, Al und Rh.

Weitere geeignete Katalysatoren sind Metallpulver wie Au, Ag, Pd oder Ni mit einer Partikelgröße von 20 bis 500 nm.
Weitere geeignete Katalysatoren sind Peroxide wie Wasserstoffperoxid, Metallchloride und metallorganische Verbindungen wie Ferrocene und Zirconocene.

Die Beschichtung kann durch Verfahren erfolgen wie sie üblicherweise zur Lackierung angewendet werden. Dabei kann es ich beispielsweise um Sprühen, Tauchen oder Fluten handeln. Anschließend kann eine thermische Nachbehandlung erfolgen, um die Aushärtung der Beschichtung zu beschleunigen. Je nach verwendeter Perhydropolysilazanformulierung und Katalysator erfolgt die Aushärtung bereits bei Raumtemperatur, kann aber durch Erhitzen beschleunigt werden.

Grundsätzlich erfolgt die Härtung der Beschichtung aufgrund der hohen Reaktivität des Perhydropolysilazans bereits bei Raumtemperatur und darunter, kann aber durch Temperaturerhöhung beschleunigt werden. Die maximal mögliche Temperatur zur Härtung hängt im wesentlichen vom Substrat ab, auf das die Beschichtung aufgebracht wird. Im Falle von blankem Aluminium können dies höhere Temperaturen, von z.B. 180-200°C sein. Wird die Beschichtung auf eine bereits vorhandene Lackschicht (entweder Basislack oder Klarlack) aufgebracht, empfiehlt es sich bei niedrigerer Temperatur zu arbeiten, so dass es nicht zur Erweichung der unteren Lackschicht kommt, bevorzugt bei 25 bis 160°C, besonders bevorzugt bei 80 bis 150°C.
Vorzugsweise wird vor Aufbringung der zweiten Schutzschicht die Basisschicht zunächst bei Raumtemperatur bis zu Temperaturen von 200°C, je nach Beschichtungsmaterial, ausgehärtet.

Des weiteren hat die Luftfeuchtigkeit einen Einfluss auf die Aushärtung der Beschichtung. Bei höherer Luftfeuchtigkeit findet eine schnellere Aushärtung statt, was von Vorteil sein kann, umgekehrt bringt die Aushärtung in einer Atmosphäre mit nur wenig Luftfeuchtigkeit, beispielsweise in einem Trockenschrank, einen langsamen und gleichmäßigen Härtungsprozess. Daher kann die Aushärtung der erfindungsgemäßen Beschichtung bei einer relativen Luftfeuchtigkeit von 0 bis 100 % erfolgen.

Die durch die oben beschriebene Perhydropolysilazanformulierung erzeugte Basisschicht bildet für sich allein schon eine leicht zu reinigende Oberfläche durch ihren hydrophilen Charakter. Die Kontaktwinkel gegenüber Wasser liegen bei etwa 30°, so dass sie schon sehr flache Tropfen ausbilden. Diese Oberfläche hat allerdings keine selbstreinigenden Eigenschaften. Sie ist kratzfest, schützt vor Korrosion, haftet ausgezeichnet sowohl auf Klarlack, Basislack oder poliertem Aluminium und bietet eine hervorragende Barriere für die nachträglich aufzubringende, Photokatalysator enthaltende Schicht. Sie erhöht außerdem den Glanz der Metalloberfläche.

Auf die oben beschriebene Basis-Silicaschicht wird nun eine zweite, einen Photokatalysator enthaltende Schicht aufgebracht. Typische Photokatalysatoren sind Titandioxid (TiO₂), Eisenoxid (Fe₂O₃), Wolframoxid (WO₂), Zinkoxid (ZnO), Zinksulfid (ZnS), Cadmiumsulfid (CdS), Strontiumtitanat (SrTiO₂) und Molybdänsulfid (MoS₂) sowie dotierte Spezies der zuvor genannten Photokatalysatoren. Bevorzugt verwendet man Titandioxid in der Anatas-Modifikation.
Damit auch diese zweite Schicht transparent ist und den ursprünglichen Glanz des Substrats nicht negativ beeinflusst, muss die Teilchengröße der Titandioxidpartikel im Bereich von 0,001 - 0,5 µm liegen. Solche Partikel sind kommerziell erhältlich, entweder in Form von Pulvern oder in Form von Dispersionen.

Es gibt verschiedene Methoden eine solche photokatalytische Schicht auf die Silicaschicht aufzubringen. Eine Methode besteht in der chemischen Aufdampfung (Chemical Vapor Depostion, CVD). Hierbei wird ein Dampf aus Titandioxidteilchen erzeugt, die sich dann auf der jeweiligen Oberfläche niederschlagen. Die Schichten sind in der Regel sehr dünn (20- 30 nm) und das Verfahren ist technisch aufwendig und teuer.
Weiterhin kann man Titandioxid in situ aus einem Sol-Gel-System erzeugen und zusammen mit dieser Sol-Gel-Matrix auf die Oberfläche aufbringen. Für Sol-Gel-Systeme ist in jedem Fall zunächst ein chemischer Schritt notwendig und eine thermische Nachbehandlung erforderlich, damit diese Systeme aushärten können. Eine weitere Variante, die im Vergleich zu den oben erwähnten Methoden kostengünstiger und einfacher anzuwenden ist, besteht in der Mischung von dispergiertem Titandioxid mit einer Perhydropolysilazanlösung. Hier ergeben sich mehrere Vorteile: es ist keine aufwendige und kostenintensive Aufdampftechnik erforderlich, es muss auch kein zusätzlicher Syntheseschritt durchgeführt werden und die Kompatibilität dieser Formulierung mit der schon vorhandenen Silicaschicht ist ausgezeichnet, da es sich in beiden Fällen und Perhydropolysilazan handelt. Das Perhydropolysilazan dient in diesem Falle also einerseits als Bindemittel für die Titandioxidteilchen, anderseits als Haftvermittler für die Haftung auf dem Silicafilm.

Es ist empfehlenswert, die Titandioxidpartikel in dem gleichen Lösungsmittel zu dispergieren, in dem auch das Perhydropolysilazan gelöst ist. Die Titandioxid-Dispersion und die Perhydropolysilazanformulierung werden anschließend in einem bestimmten Verhältnis gemischt und die daraus entstehende Dispersion wird durch Tauchen, Fluten oder Sprühen auf die Silicaschicht aufgebracht. Diese zweite Schicht kann bei Raumtemperatur aushärten, der Vorgang der Aushärtung kann aber auch durch Erwärmen beschleunigt werden.

Die Konzentration der Perhydropolysilazan in einem Lösungsmittel liegt zwischen 0,01 und 40 %, bevorzugt zwischen 1 und 25 %. Die Konzentration der Titandioxid Dispersion liegt zwischen 0,01 und 70 %, bevorzugt zwischen 0,5 und 30 %. Das Feststoffverhältnis zwischen Perhydropolysilazan und Titandioxid liegt bei 1:0,01 bis 1:100, bevorzugt bei 1:0,1 bis 1:50. Die Konzentration der vereinigten Lösungen aus Perhydropolysilazan und Titandioxid liegt bei 0,01 bis 50 %.

Um eine ausgezeichnete photokatalytische bzw. selbstreinigende Wirkung der Beschichtung zu erreichen, ist es notwendig, dass der Gehalt an Titandioxid besonders bevorzugt bei 1 - 5 Teile bezogen auf 1 Teil PHPS beträgt. Damit ist gewährleistet, dass sich in der obersten Schicht genug reaktive Titandioxid Partikel befinden, die für die Photokatalyse und die Superhydrophilie sorgen.

Ferner betrifft die vorliegende Erfindung insbesondere die Verwendung der vorgehend beschriebenen Beschichtung als selbstreinigende Schutzschicht für Autofelgen, insbesondere Aluminiumfelgen.

### Beispiele

Bei den verwendeten Perhydropolysilazanen handelt es sich um Produkte der Fa. Clariant Japan K.K. Verwendete Lösemittel sind Mischungen aus Xylol und Pegasol (Bezeichnung NP) oder Di-n-butylether (Bezeichnung NL). Die Lösungen enthalten als Katalysatoren entweder Amine, Metalle oder Metallsalze.
Bei dem verwendeten Titandioxid handelt es sich um Dispersionen von nanoskaligem Anatas in Xylol.

In den folgenden Beispielen sind Teile und Prozentangaben auf das Gewicht bezogen.

Bei den Aluminiumfelgen handelt es sich um handelsübliche Aluminiumfelgen, wie sie über den Autozubehörhandel bezogen werden können, um Teile dieser Felgen, die durch Zersägen ganzer Felgen erhalten wurden oder um Testbleche bestehend aus geeignetem Material.
Die Beschichtung wurde entweder durch Sprühen mit einer handelsüblichen Lackierpistole oder durch Tauchen in einer handelsüblichen Tauchapparatur durchgeführt.

Die Bestimmung der Kratzfestigkeit erfolgt durch mehrfache Belastung (fünf Doppelhübe) mit einer Stahlwolle vom Typ 00 und einer Kraft von 3 N. Dabei erfolgt die Bewertung der Verkratzung visuell nach folgender Skala: sehr gut (keine Kratzer), gut (wenige Kratzer), befriedigend (deutliche Kratzer), ausreichend (stark verkratzt) und mangelhaft (sehr stark verkratzt).

Die Bestimmung der Haftung der Beschichtung erfolgte durch Gitterschnitt-Prüfung nach DIN EN ISO 2409, wobei die Haftung auf einer Skala von 0 (bester Wert) bis 4 (schlechtester Wert) erfolgt.

Für die Bestimmung der photokatalytischen Wirksamkeit bzw. des selbstreinigenden Effekts wurde als Modellsubstanz Methylenblau verwendet und deren Abbau visuell (Entfärbung) verfolgt.

### Beispiel 1 (Beschichtung eines lackierten Aluminiumbleches mit Basislack und Klarlack durch Tauchen)

Ein lackiertes Aluminiumblech, das mit einem handelsüblichen pigmentierten Basislack und einem Klarlack versehen ist, wird in eine Tauchapparatur, die mit einer 20%igen Perhydropolysilazan-Lösung in n-Dibutylether (NL120A-20, enthält Palladiumpropionat als Katalysator) gefüllt ist, getaucht und mit einer Geschwindigkeit von 120 cm /min herausgezogen. Anschließend wird für ca. 10 min an der Luft abgelüftet und danach 60 min bei 80°C getrocknet. Es resultiert eine klare, transparente und rissfreie Beschichtung auf der Oberfläche. Der Glanzgrades Bleches hat im Vergleich zum unbeschichteten Blech um 5 Glanzeinheiten zugenommen. Diese Schicht ist mindestens 2 µm dick.
Anschließend wird auf diese Barriereschicht eine Mischung aus 3,5 Gewichtsteilen photokatalytischem Titandioxid in Xylol und 1 Gewichtsteil Perhydropolysilazan in Xylol (NL110-20, enthält 4,4'-Trismethylen(1-methylpiperidin))ebenfalls durch Tauchen aufgebracht. Das Blech wird mit einer Geschwindigkeit von 120 cm/min aus dem Tauchbad herausgezogen. Man lässt 10 min. ablüften.
Man erhält eine klare; transparente und rissfreie Beschichtung, die im Praxistest im Vergleich zu einem unbeschichteten Aluminiumblech deutlich leichter zu reinigen ist und darüber hinaus auch deutlicher weniger zum Anschmutzen neigt. Nach mehrtägiger Sonnenlichteinstrahlung bilden sich keine Tropfen mehr auf der Oberfläche, sondern ein dünner Wasserfilm.
Bringt man auf das Blech eine Methylenblau-Lösung auf und lässt dieses Blech im Sonnenlicht stehen, verschwindet die blaue Farbe schon nach kurzer Zeit.

### Beispiel 2 (Beschichtung eines polierten Aluminiumbleches ohne Lack durch Tauchen)

Bei einem polierten Aluminiumblech ohne Klarlack wurde auf das Aufbringen einer Barriereschicht aus Perhydropolysilazan verzichtet, da der Untergrund nicht aus einem organischen Lack besteht, sondern aus poliertem Aluminium, dass durch die photokatalytische Wirkung des Titandioxids nicht angegriffen wird.

Dieses-Blech wird in eine Tauchapparatur, die mit einer Mischung aus 3,5 Gewichtsteilen von photokatalytischem Titandioxid in Xylol und 1 Gewichtsteil Perhydropolysilazan in Xylol (NL110-20, enthält 4,4'-Trismethylen(1-methylpiperidin)) gefüllt ist, getaucht und mit einer Geschwindigkeit von 120 cm/min herausgezogen. Anschließend wird für ca. 10 min an der Luft abgelüftet und danach 60 min bei 80°C getrocknet. Man erhält eine klare, transparente und rissfreie Beschichtung. Diese Beschichtung ist kratzfest, schützt vor Korrosion, verhindert das Einbrennen von Bremsstaub und ist selbstreinigend.
Im Test ist das beschichtete, polierte Aluminiumblech im Vergleich zu einem mit Klarlack beschichteten Aluminiumblech deutlich leichter zu reinigen und neigt darüber hinaus auch deutlicher weniger zum Anschmutzen. Nach mehrtägiger Sonnenlichteinstrahlung bilden sich keine Tropfen mehr auf der Oberfläche, sondern ein dünner Wasserfilm.
Bringt man auf das Blech eine Methylenblau-Lösung auf und lässt dieses Blech im Sonnenlicht stehen, verschwindet die blaue Farbe schon nach kurzer Zeit.

### Beispiel 3 (Beschichtung einer Aluminiumfelge durch Sprühen)

Eine handelsübliche Aluminiumfelge, wie sie im Automobilzubehörhandel bezogen werden kann, wird mit einer 20 %igen Perhydropolysilazan-Lösung in n-Dibutylether (NL120A-20, enthält Palladiumpropionat als Katalysator) besprüht. Anschließend wird für ca. 10 min an der Luft abgelüftet und danach 60 min bei 80°C getrocknet. Es resultiert eine klare, transparente und rissfreie Beschichtung auf der Oberfläche. Der Glanzgrad der beschichteten Felge hat dabei im Vergleich zur unbeschichteten Felge um 5 Glanzeinheiten zugenommen. Diese Schicht ist mindestens 2 µm dick.
Anschließend wird auf diese Barriereschicht eine Mischung aus 3,5 Gewichtsteilen von photokatalytischem Titandioxid in Xylol und 1 Gewichtsteil Perhydropolysilazan in Xylol (NL110-20, enthält 4,4'-Trismethylen(1-methylpiperidin)) gesprüht. Man lässt 10 min. ablüften.
Man erhält eine klare, transparente und rissfreie Beschichtung, die im Praxistest im Vergleich mit einer unbeschichteten Aluminiumfelge des gleichen Fabrikats am gleichen Fahrzeug deutlich leichter zu reinigen ist und darüber hinaus auch deutlicher weniger zum Anschmutzen neigt. Nach mehrtägiger Sonnenlichteinstrahlung bilden sich keine Tropfen mehr auf der Oberfläche, sondern es bildet sich ein dünner Wasserfilm.
Bringt man auf die Felge eine Methylenblau-Lösung auf und lässt die Felge im Sonnenlicht stehen, verschwindet die blaue Farbe schon nach kurzer Zeit.

### Beispiel 4 (Beschichtung einer polierten Aluminiumfelge durch Sprühen)

Eine polierte oder sog. glanzgedrehte Aluminiumfelge ohne Klarlack wurde von einem Felgenhersteller bezogen Bei dieser Aluminiumfelge wurde auf das Aufbringen einer Barriereschicht aus Perhydropolysilazan verzichtet, da der Untergrund nicht aus einem organischen Lack besteht, sondern aus poliertem Aluminium, dass durch die photokatalytische Wirkung des Titandioxids nicht angegriffen wird.
Diese Felge wird mit einer Mischung aus 3,5 Gewichtsteilen von photokatalytischem Titandioxid in Xylol und 1 Gewichtsteil Perhydropolysilazan in Xylol (NL110-20, enthält 4,4'-Trismethylen(1-methylpiperidin)) durch Sprühen beschichtet. Anschließend wird für ca. 10 min an der Luft abgelüftet und danach 60 min bei 80°C getrocknet. Man erhält eine klare, transparente und rissfreie Beschichtung. Diese Beschichtung ist kratzfest, schützt vor Korrosion, verhindert das Einbrennen von Bremsstaub und ist selbstreinigend.
Im Praxistest ist die beschichtete, polierte Aluminiumfelge im Vergleich zu einer unbeschichteten Aluminiumfelge des gleichen Fabrikats am gleichen Fahrzeug deutlich leichter zu reinigen und neigt darüber hinaus auch deutlicher weniger zum Anschmutzen. Nach mehrtägiger Sonnenlichteinstrahlung bilden sich keine Tropfen mehr auf der Oberfläche, sondern es bildet sich ein dünner Wasserfilm. Bringt man auf die Felge eine Methylenblau-Lösung auf und lässt die Felge im Sonnenlicht stehen, verschwindet die blaue Farbe schon nach kurzer Zeit.

## Patentansprüche

1. Beschichtung für Metalloberflächen bestehend aus
a.) einer kratzfesten Perhydropolysilazanbasisschicht und
b.) einer oberen Schutzschicht, enthaltend mindestens ein Perhydropolysilazan der Formel (1) und photokatalytisches Titandioxid 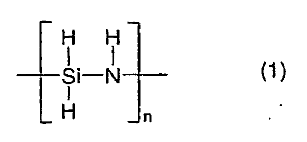
wobei es sich bei n um eine ganze Zahl handelt und n so bemessen ist, dass das Perhydropolysilazan ein zahlenmittleres Molekulargewicht von 150 bis 150.000 g/mol aufweist.

2. Beschichtung nach Anspruch 1, **dadurch gekennzeichnet, dass** die Schutzschicht eine Dicke von mindestens 1 Mikrometer, bevorzugt 2 bis 20 Mikrometer, besonders bevorzugt 3 bis 10 Mikrometer aufweist.

3. Beschichtung nach Anspruch 1 und/oder 2, **dadurch gekennzeichnet, dass** das Verhältnis von Perhydropolysilazan zu Titandioxid in der photokatalytischen Schicht 1:0,01 bis 1:100, bevorzugt 1:0,1 - 1:50, besonders bevorzugt 1:1 - 1:5 beträgt.

4. Beschichtung nach mindestens einem der vorhergehenden Ansprüche, **dadurch gekennzeichnet, dass** das verwendete Titandioxid in der Anatas Modifikation vorliegt.

5. Beschichtung nach mindestens einem der vorhergehenden Ansprüche, **dadurch gekennzeichnet, dass** die Teilchengröße der Titandioxidpartikel im Bereich von 0,001-0,5 µm liegen.

6. Verfahren zur Herstellung einer selbstreinigenden Beschichtung für Metalloberflächen, wobei zunächst in einem ersten Schritt
a.) eine Perhydropolysilazanlösung, enthaltend einen Katalysator und gegebenenfalls ein oder mehrere Co-Bindemittel in einem Lösungsmittel auf die Metalloberfläche als Basisschicht aufgebracht wird und anschließend
b.) auf diese Basisschicht direkt eine weitere Schutzschicht, enthaltend mindestens ein Perhydropolysilazan der Formel (1) und photokatalytisches Titandioxid 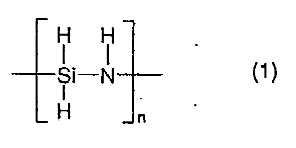 wobei es sich bei n um eine ganze Zahl handelt und n so bemessen ist, dass das Perhydropolysilazan ein zahlenmittleres Molekulargewicht von 150 bis 150.000 g/mol aufweist, aufgebracht wird.

7. Verfahren nach Anspruch 6, **dadurch gekennzeichnet, dass** die Konzentration an Perhydropolysilazan in dem Lösungsmittel für die Basisschicht und die Schutzschicht im Bereich von 0,01 bis 40 Gew. % liegt.

8. Verfahren nach Anspruch 6 und/oder 7, **dadurch gekennzeichnet, dass** die Aushärtung der Schichten bei Raumtemperatur bis 200°C erfolgt.

9. Verfahren nach mindestens einem der vorhergehenden Ansprüche 6 bis 8, **dadurch gekennzeichnet, dass** bei einer Aufbringung einer Basisschicht gemäß Schritt a), diese zunächst ausgehärtet wird, bevor die Schutzschicht appliziert wird.

10. Verwendung einer Beschichtung gemäß mindestens einer der Ansprüche 1 bis 5 als selbstreinigende Schutzbeschichtung für metallische Oberflächen.

11. Verwendung nach Anspruch 10, **dadurch gekennzeichnet, dass** es sich um eine Schutzbeschichtung auf Felgen, insbesondere Aluminiumfelgen handelt.

## Claims

1. A coating for metal surfaces which is composed of
a.) a scratch-resistant perhydropolysilazane base coat and
b.) an upper protective coat comprising at least one perhydropolysilazane of the formula (1) and photocatalytic titanium dioxide 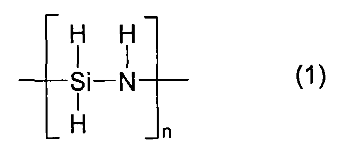
where n is an integer and is such that the perhydropolysilazane has a number-average molecular weight of from 150 to 150 000 g/mol.

2. The coating as claimed in claim 1, wherein the protective coat has a thickness of at least 1 micrometer, preferably 2 to 20 micrometers, more preferably 3 to 10 micrometers.

3. The coating as claimed in claim 1 and/or 2, wherein the ratio of perhydropolysilazane to titanium dioxide in the photocatalytic coat is 1:0.01 to 1:100, preferably 1:0.1-1:50, more preferably 1:1 - 1:5.

4. The coating as claimed in at least one of the preceding claims, wherein the titanium dioxide used is in the anatase modification.

5. The coating as claimed in at least one of the preceding claims, wherein the particle size of the titanium dioxide particles is in the range of 0.001-0.5 µm.

6. A process for producing a self-cleaning coating for metal surfaces, in which first of all in a first step
a.) a perhydropolysilazane solution comprising a catalyst and if desired one or more cobinders in a solvent is applied to the metal surface as a base coat and subsequently
b.) a further protective coat is applied to this base coat directly, said protective coat comprising at least one perhydropolysilazane of the formula (1) and photocatalytic titanium dioxide 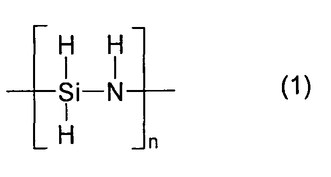 where n is an integer and is such that the perhydropolysilazane has a number-average molecular weight of from 150 to 150 000 g/mol.

7. The process as claimed in claim 6, wherein the concentration of perhydropolysilazane in the solvent for the base coat and the protective coat is in the range from 0.01 % to 40% by weight.

8. The process as claimed in claim 6 and/or 7, wherein the curing of the coats takes place at room temperature to 200°C.

9. The process as claimed in at least one of the preceding claims 6 to 8, wherein when a base coat is applied in step a) it is first cured before the protective coat is applied.

10. The use of a coating as claimed in at least one of claims 1 to 5 as a self-cleaning protective coating for metallic surfaces.

11. The use as claimed in claim 10, wherein the protective coating is on rims, especially aluminum rims.

## Revendications

1. Revêtement pour surfaces métalliques constitué de
a.) une couche de base de perhydropolysilazane résistant à l'abrasion et
b.) une couche de protection supérieure, contenant au moins un perhydropolysilazane de formule (1) et du dioxyde de titane photocatalytique 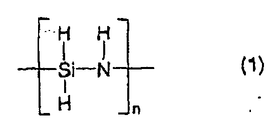
dans lequel il s'agit pour n d'un nombre entier et n est mesuré de sorte que le perhydropolysilazane présente une masse moléculaire moyenne en nombre de 150 à 150 000 g/mol.

2. Revêtement selon la revendication 1, **caractérisé en ce que** la couche de protection présente une épaisseur d'au moins un micromètre, de préférence de 2 à 20 micromètre, de manière particulièrement préférée de 3 à 10 micromètre.

3. Revêtement selon la revendication 1 et/ou 2, **caractérisé en ce que** le rapport du perhydropolysilazane au dioxyde de titane dans la couche photocatalytique soit de 1:0,01 à 1:100, de préférence de 1:0,1-1:50, de manière particulièrement préférée de 1:1-1:5.

4. Revêtement selon au moins une des revendications précédentes, **caractérisé en ce que** le dioxyde de titane utilisé se présente sous la modification anatase.

5. Revêtement selon au moins une des revendications précédentes, **caractérisé en ce que** la taille de particules des particules de dioxyde de titane se situe dans la gamme de 0,001-0,5 µm.

6. Procédé de préparation d'un revêtement autonettoyant pour surfaces métalliques, dans lequel d'abord dans une première étape
a.) on dépose une solution de perhydropolysilazane, contenant un catalyseur et éventuellement un ou plusieurs co-liants dans un solvant sur la surface métallique comme couche de base et ensuite
b.) on dépose directement sur cette couche de base une autre couche de protection, contenant au moins un perhydropolysilazane de formule (1) et un dioxyde de titane photocatalytique 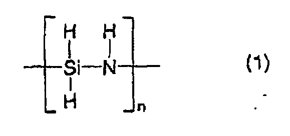
dans lequel il s'agit pour n d'un nombre entier et n est mesuré de sorte que le perhydropolysilazane présente une masse moléculaire moyenne en nombre de 150 à 150 000 g/mol.

7. Procédé selon la revendication 6, **caractérisé en ce** la concentration de perhydropolysilazane dans le solvant pour la couche de base et la couche de protection se situe dans la gamme de 0,01 à 40 % en poids.

8. Procédé selon la revendication 6 et/ou 7, **caractérisé en ce que** le durcissement des couches s'effectue de la température ambiante à 200 °C.

9. Procédé selon au moins l'une des revendications précédentes 6 à 8, **caractérisé en ce qu'**après le dépôt d'une couche de base selon l'étape a), celle-ci est d'abord durcie, avant d'appliquer la couche de protection.

10. Utilisation d'un revêtement selon au moins l'une des revendications 1 à 5 comme revêtement de protection autonettoyant pour des surfaces métalliques.

11. Utilisation selon la revendication 10, **caractérisée en ce qu'**il s'agit d'un revêtement de protection sur des jantes, en particulier des jantes d'aluminium.
